# EUROPEAN PATENT APPLICATION

(11) **EP 2 725 472 A2**
(43) Date of publication of application: **30.04.2014**
(21) Application number: 13001982.1
(22) Date of filing: 16.04.2013
(51) Int. Cl.: G06F 3/0488, G06F 1/16

(54) **Mobile terminal**

(30) Priority: 29.10.2012 KR 20120120683
(71) Applicant: LG Electronics, Inc., Seoul (KR)
(72) Inventor: Song, Joonho, Seoul (KR)
(74) Representative: Urner, Peter

(57) **Abstract**

Disclosed is a mobile terminal, including: a terminal body having a front surface, a rear surface and side surfaces; a display unit disposed on the front surface of the terminal body, and configured to enable writing thereon through a touch input in a writing mode; a squeeze sensing unit mounted to the side surface of the terminal body for sensing of a squeeze operation applied to the terminal body, and configured to sense a pressure applied to the side surface of the terminal body; and a controller configured to recognize a type of the squeeze operation by the squeeze sensing unit, and to generate different control commands related to the writing mode based on the recognized type.

## Description

### BACKGROUND OF THE INVENTION

### 1. Field of the Invention

The present disclosure relates to a mobile terminal, and particularly, to a mobile terminal having a squeeze sensing unit, and a method for controlling the same.

### 2. Background of the Invention

In general, a terminal may be classified into a mobile (portable) terminal and a stationary terminal according to a moveable state. The mobile terminal may be also classified into a handheld terminal and a vehicle mount terminal according to a user's carriage method.

As functions of the terminal become more diversified, the terminal can support more complicated functions such as capturing images or video, reproducing music or video files, playing games, receiving broadcast signals, and the like. By comprehensively and collectively implementing such functions, the mobile terminal may be embodied in the form of a multimedia player or a device.

Various attempts have been made to implement complicated functions in such a multimedia device by means of hardware or software. As one example, a user interface for allowing a user to easily and conveniently search for or select a function is being provided.

As the mobile terminal is considered as a personal belonging to express a user's personality, various designs are required. The designs include structural changes and improvements for allowing a user to more conveniently use the mobile terminal.

Owing to such improvements, a user can generate input signals using a touch sensor provided at a display unit of the mobile terminal. However, the conventional mobile terminal has a structure that the touch sensor is activated only when the display unit is activated. This may cause a limitation in generating various types of input signals in relation to a writing mode. Accordingly, required is a mobile terminal capable of generating input signals using various devices.

### SUMMARY OF THE INVENTION

Therefore, an aspect of the detailed description is to provide a mobile terminal capable of performing a new type of user input differentiated from that of the conventional art.

Another aspect of the detailed description is to provide a mobile terminal capable of more conveniently providing a user interface (UI) in a writing mode.

To achieve these and other advantages and in accordance with the purpose of this specification, as embodied and broadly described herein, there is provided a mobile terminal, comprising: a terminal body having a front surface, a rear surface and side surfaces; a display unit disposed on the front surface of the terminal body, and configured to enable writing thereon through a touch input in a writing mode; a squeeze sensing unit mounted to the side surface of the terminal body for sensing of a squeeze operation applied to the terminal body, and configured to sense a pressure applied to the side surface of the terminal body; and a controller configured to recognize a type of the squeeze operation by the squeeze sensing unit, and to generate different control commands related to the writing mode based on the recognized type.

According to one embodiment of the present invention, the controller may convert the current mode into the writing mode, if the squeeze operation is recognized in a mode different from the writing mode. When the controller converts the current mode into the writing mode, a memo window on which writing can be performed through a touch input may be output to the display unit. The writing mode may be maintained while a pressure is applied to the squeeze sensing unit. And, the writing mode may be converted into said different mode when the pressure applied to the squeeze sensing unit is released.

According to another embodiment of the present invention, in the writing mode, the size of written characters may be enlarged or contracted according to a type of the squeeze operation. In a case where the squeeze operation is pumping for pressing two side surfaces of the terminal body and releasing the pressed state in a repeated manner, characters may be enlarged or contracted by a single pumping in the writing mode.

According to another embodiment of the present invention, in the writing mode, said different control commands may be set according to a time duration of the squeeze operation or a size of an applied pressure. In the writing mode, one of an enlargement mode, a contraction mode and an edition mode with respect to characters may be performed, according to a time duration of the squeeze operation or a size of an applied pressure.

According to another embodiment of the present invention, in the writing mode, if a pressure which satisfies a preset condition is applied to the squeeze sensing unit, a memo window on which writing can be performed through a touch input may be output to the display unit.

According to another embodiment of the present invention, the squeeze sensing unit may include at least one squeeze sensor disposed on one or two side surfaces of the terminal body; and a feedback module configured to output a feedback in an audible or tactile manner, upon sensing of a pressure by the squeeze sensor.

According to another aspect of the present invention, there is provided a mobile terminal, comprising: a terminal body having a front surface, a rear surface and side surfaces; a display unit disposed on the front surface of the terminal body, and configured to enable a touch input thereon; a squeeze sensing unit configured to sense a pressure applied to at least one side surface of the terminal body, so as to recognize a squeeze operation applied to the terminal body; and a controller configured to convert the current state of the display unit into a state where writing can be performed through a touch input, if a pressure which satisfies a preset condition is applied to the squeeze sensing unit.

Further scope of applicability of the present application will become more apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from the detailed description.

### BRIEF DESCRIPTION OF THE DRAWINGS

The accompanying drawings, which are included to provide a further understanding of the invention and are incorporated in and constitute a part of this specification, illustrate exemplary embodiments and together with the description serve to explain the principles of the invention.

In the drawings:
FIG. 1 is a block diagram of a mobile terminal according to a first embodiment of the present invention;
FIGS. 2A and 2B are conceptual views showing the operation of the mobile terminal according to the present invention;
FIG. 3A is a front perspective view of a mobile terminal according to an embodiment of the present invention;
FIG. 3B is a rear perspective view of the mobile terminal of FIG. 3A;
FIG. 3C is a perspective view showing a modification example of the mobile terminal of FIG. 3A;
FIG. 4 is a partial exploded view of the mobile terminal of FIG. 3A; and
FIGS. 5 to 14 are conceptual views showing user interfaces (Uls) implemented by the present invention.

### DETAILED DESCRIPTION OF THE INVENTION

Hereinafter, a mobile terminal according to the present disclosure will be explained in more detail with reference to the attached drawings. The suffixes attached to components of the wireless speaker, such as 'module' and 'unit or portion' were used for facilitation of the detailed description of the present disclosure. Therefore, the suffixes do not have different meanings from each other.

The mobile terminal according to the present disclosure may include a portable phone, a smart phone, a laptop computer, a tablet computer, a digital broadcasting terminal, Personal Digital Assistants (PDA), Portable Multimedia Player (PMP), a navigation system, etc.

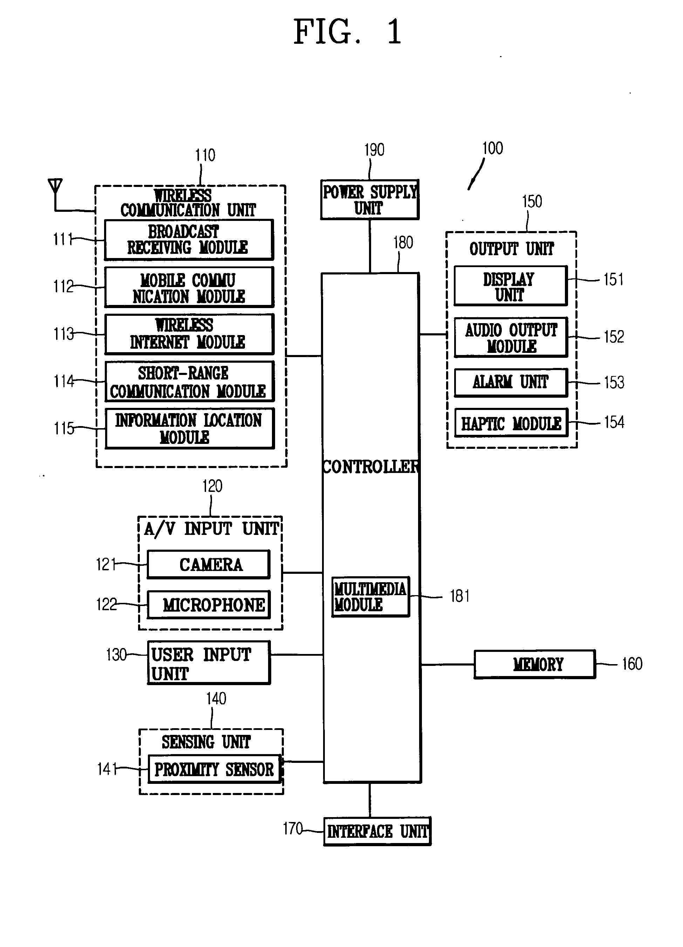

FIG. 1 is a block diagram of a mobile terminal according to one embodiment of the present disclosure.

The mobile terminal 100 may comprise components, such as a wireless communication unit 110, an Audio/Video (A/V) input unit 120, a user input unit 130, a sensing unit 140, an output unit 150, a memory 160, an interface unit 170, a controller 180, a power supply unit 190, and the like. FIG. 1 shows the mobile terminal 100 having various components, but it is understood that implementing all of the illustrated components is not a requirement. Greater or fewer components may alternatively be implemented.

Hereinafter, each component is described in sequence.

The wireless communication unit 110 may typically include one or more components which permit wireless communications between the mobile terminal 100 and a wireless communication system or between the mobile terminal 100 and a network within which the mobile terminal 100 is located. For example, the wireless communication unit 110 may include a broadcast receiving module 111, a mobile communication module 112, a wireless internet module 113, a short-range communication module 114, a position information module 115 and the like.

The broadcast receiving module 111 receives broadcast signals and/or broadcast associated information from an external broadcast management server (or other network entity) via a broadcast channel.

The broadcast channel may include a satellite channel and/or a terrestrial channel. The broadcast management server may be a server that generates and transmits a broadcast signal and/or broadcast associated information or a server that receives a previously generated broadcast signal and/or broadcast associated information and transmits the same to a terminal. The broadcast associated information may refer to information associated with a broadcast channel, a broadcast program or a broadcast service provider. The broadcast signal may include a TV broadcast signal, a radio broadcast signal, a data broadcast signal, and the like. Also, the broadcast signal may further include a broadcast signal combined with a TV or radio broadcast signal.

The broadcast associated information may also be provided via a mobile communication network and, in this case, the broadcast associated information may be received by the mobile communication module 112.

The broadcast signal may exist in various forms. For example, it may exist in the form of an electronic program guide (EPG) of digital multimedia broadcasting (DMB), electronic service guide (ESG) of digital video broadcast-handheld (DVB-H), and the like.

The broadcast receiving module 111 may be configured to receive signals broadcast by using various types of broadcast systems. In particular, the broadcast receiving module 111 may receive a digital broadcast by using a digital broadcast system such as multimedia broadcasting-terrestrial (DMB-T), digital multimedia broadcasting-satellite (DMB-S), digital video broadcast-handheld (DVB-H), the data broadcasting system known as media forward link only (MediaFLO^{®}), integrated services digital broadcast-terrestrial (ISDB-T), etc. The broadcast receiving module 111 may be configured to be suitable for every broadcast system that provides a broadcast signal as well as the above-mentioned digital broadcast systems.

Broadcasting signals and/or broadcasting associated information received through the broadcast receiving module 111 may be stored in the memory 160.

The mobile communication module 112 transmits/receives wireless signals to/from at least one of network entities (e.g., base station, an external terminal, a server, etc.) on a mobile communication network. Here, the wireless signals may include audio call signal, video call signal, or various formats of data according to transmission/reception of text/multimedia messages.

The wireless internet module 113 supports wireless Internet access for the mobile terminal. This module may be internally or externally coupled to the mobile terminal 100. Examples of such wireless Internet access may include Wireless LAN (WLAN) (Wi-Fi), Wireless Broadband (Wibro), World Interoperability for Microwave Access (Wimax), High Speed Downlink Packet Access (HSDPA), and the like.

The short-range communication module 114 denotes a module for short-range communications. Suitable technologies for implementing this module may include BLUETOOTH, Radio Frequency IDentification (RFID), Infrared Data Association (IrDA), Ultra-WideBand (UWB), ZigBee, and the like.

The position information module 115 denotes a module for sensing or calculating a position of a mobile terminal. An example of the position information module 115 may include a Global Position System (GPS) module.

Referring to FIG. 1, the A/V input unit 120 is configured to receive an audio or video signal. The A/V input unit 120 may include a camera 121, a microphone 122 or the like. The camera 121 processes image data of still pictures or video acquired by an image capture device in a video capturing mode or an image capturing mode. The processed image frames may be displayed on a display unit 151.

The image frames processed by the camera 121 may be stored in the memory 160 or transmitted via the wireless communication unit 110. The camera 121 may be provided in two or more according to the configuration of the mobile terminal.

The microphone 122 may receive sounds (audible data) via a microphone in a phone call mode, a recording mode, a voice recognition mode, and the like, and can process such sounds into audio data. The processed audio (voice) data may be converted for output into a format transmittable to a mobile communication base station via the mobile communication module 112 in case of the phone call mode. The microphone 122 may implement various types of noise canceling (or suppression) algorithms to cancel (or suppress) noise or interference generated in the course of receiving and transmitting audio signals.

The user input unit 130 may generate key input data from commands entered by a user to control various operations of the mobile communication terminal. The user input unit 130 may include a keypad, a dome switch, a touch pad (e.g., a touch sensitive member that detects changes in resistance, pressure, capacitance, etc. due to being contacted) a jog wheel, a jog switch, and the like.

The sensing unit 140 detects a current status (or state) of the mobile terminal 100 such as an opened or closed state of the mobile terminal 100, a location of the mobile terminal 100, the presence or absence of user contact with the mobile terminal 100, the orientation of the mobile terminal 100, an acceleration or deceleration movement and direction of the mobile terminal 100, etc., and generates commands or signals for controlling the operation of the mobile terminal 100. For example, when the mobile terminal 100 is implemented as a slide type mobile phone, the sensing unit 140 may sense whether the slide phone is open or closed. In addition, the sensing unit 140 can detect whether or not the power supply unit 190 supplies power or whether or not the interface unit 170 is coupled with an external device. The sensing unit 140 may include a proximity sensor 141.

The output unit 150 is configured to provide outputs in a visual, audible, and/or tactile manner. The output unit 150 may include the display unit 151, an audio output module 152, an alarm unit 153, a haptic module 154, and the like.

The display unit 151 may display information processed in the mobile terminal 100. For example, when the mobile terminal 100 is in a phone call mode, the display unit 151 may display a User Interface (UI) or a Graphic User Interface (GUI) associated with a call or other communication (such as text messaging, multimedia file downloading, etc.). When the mobile terminal 100 is in a video call mode or image capturing mode, the display unit 151 may display a captured image and/or received image, a UI or GUI that shows videos or images and functions related thereto, and the like.

The display unit 151 may include at least one of a Liquid Crystal Display (LCD), a Thin Film Transistor-LCD (TFT-LCD), an Organic Light Emitting Diode (OLED) display, a flexible display, a three-dimensional (3D) display, or the like.

Some of these displays may be configured to be transparent so that outside may be seen therethrough, which may be referred to as a transparent display. A representative example of the transparent display may include a Transparent Organic Light Emitting Diode (TOLED), and the like. The rear surface portion of the display unit 151 may also be implemented to be optically transparent. Under this configuration, a user can view an object positioned at a rear side of a terminal body through a region occupied by the display unit 151 of the terminal body.

The display unit 151 may be implemented in two or more in number according to a configured aspect of the mobile terminal 100. For instance, a plurality of displays may be arranged on one surface integrally or separately, or may be arranged on different surfaces.

Here, if the display unit 151 and a touch sensitive sensor (referred to as a touch sensor) have a layered structure therebetween, the structure may be referred to as a touch screen. The display unit 151 may be used as an input device rather than an output device. The touch sensor may be implemented as a touch film, a touch sheet, a touch pad, and the like.

The touch sensor may be configured to convert changes of a pressure applied to a prescribed part of the display unit 151, or a capacitance occurring from a prescribed part of the display unit 151, into electric input signals. Also, the touch sensor may be configured to sense not only a touched position and a touched area, but also a touch pressure.

When touch inputs are sensed by the touch sensors, corresponding signals are transmitted to a touch controller (not shown). The touch controller processes the received signals, and then transmits corresponding data to the controller 180. Accordingly, the controller 180 may sense which region of the display unit 151 has been touched.

Referring to FIG. 1, a proximity sensor 141 may be arranged at an inner region of the mobile terminal blocked by the touch screen, or near the touch screen. The proximity sensor 141 indicates a sensor to sense presence or absence of an object approaching to a surface to be sensed, or an object disposed near a surface to be sensed, by using an electromagnetic field or infrared rays without a mechanical contact. The proximity sensor 141 has a longer lifespan and a more enhanced utility than a contact sensor.

The proximity sensor 141 may include a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and so on. When the touch screen is implemented as a capacitance type, proximity of a pointer to the touch screen is sensed by changes of an electromagnetic field. In this case, the touch screen (touch sensor) may be categorized into a proximity sensor.

Hereinafter, for the sake of brief explanation, a status that the pointer is positioned to be proximate onto the touch screen without contact will be referred to as 'proximity touch', whereas a status that the pointer substantially comes in contact with the touch screen will be referred to as 'contact touch'. For the position corresponding to the proximity touch of the pointer on the touch screen, such position corresponds to a position where the pointer faces perpendicular to the touch screen upon the proximity touch of the pointer.

The proximity sensor 141 senses proximity touch, and proximity touch patterns (e.g., distance, direction, speed, time, position, moving status, etc.). Information relating to the sensed proximity touch and the sensed proximity touch patterns may be output onto the touch screen.

The audio output module 152 may convert and output as sound audio data received from the wireless communication unit 110 or stored in the memory 160 in a call signal reception mode, a call mode, a record mode, a voice recognition mode, a broadcast reception mode, and the like. Also, the audio output module 152 may provide audible outputs related to a particular function performed by the mobile terminal 100 (e.g., a call signal reception sound, a message reception sound, etc.). The audio output module 152 may include a speaker, a buzzer, and so on.

The alarm unit 153 may provide outputs to inform about the occurrence of an event of the mobile terminal 100. Typical events may include call reception, message reception, key signal inputs, a touch input, etc. In addition to audio or video outputs, the alarm unit 153 may provide outputs in a different manner to inform about the occurrence of an event. The video signal or the audio signal may be output via the display unit 151 or the audio output module 152. Accordingly, the display unit 151 or the audio output module 152 may be classified as a part of the alarm unit 153.

The haptic module 154 generates various tactile effects which a user can feel. A representative example of the tactile effects generated by the haptic module 154 includes vibration. Vibration generated by the haptic module 154 may have a controllable intensity, a controllable pattern, and so on. For instance, different vibration may be output in a synthesized manner or in a sequential manner.

The haptic module 154 may generate various tactile effects, including not only vibration, but also arrangement of pins vertically moving with respect to a skin being touched (contacted), air injection force or air suction force through an injection hole or a suction hole, touch by a skin surface, presence or absence of contact with an electrode, effects by stimulus such as an electrostatic force, reproduction of cold or hot feeling using a heat absorbing device or a heat emitting device, and the like.

The haptic module 154 may be configured to transmit tactile effects (signals) through a user's direct contact, or a user's muscular sense using a finger or a hand. The haptic module 154 may be implemented in two or more in number according to the configuration of the mobile terminal 100.

The memory 160 may store a program for the processing and control of the controller 180. Alternatively, the memory 160 may temporarily store input/output data (e.g., phonebook data, messages, still images, video and the like). Also, the memory 160 may store data relating to various patterns of vibrations and audio output upon the touch input on the touch screen.

The memory 160 may be implemented using any type of suitable storage medium including a flash memory type, a hard disk type, a multimedia card micro type, a memory card type (e.g., SD or DX memory), Random Access Memory (RAM), Static Random Access Memory (SRAM), Read-Only Memory (ROM), Electrically Erasable Programmable Read-only Memory (EEPROM), Programmable Read-only Memory (PROM), magnetic memory, magnetic disk, optical disk, and the like. Also, the mobile terminal 100 may operate a web storage which performs the storage function of the memory 160 on the Internet.

The interface unit 170 may generally be implemented to interface the mobile terminal with external devices. The interface unit 170 may allow a data reception from an external device, a power delivery to each component in the mobile terminal 100, or a data transmission from the mobile terminal 100 to an external device. The interface unit 170 may include, for example, wired/wireless headset ports, external charger ports, wired/wireless data ports, memory card ports, ports for coupling devices having an identification module, audio Input/Output (I/O) ports, video I/O ports, earphone ports, and the like.

The identification module may be configured as a chip for storing various information required to authenticate an authority to use the mobile terminal 100, which may include a User Identity Module (UIM), a Subscriber Identity Module (SIM), a Universal Subscriber Identity Module (USIM), and the like. Also, the device having the identification module (hereinafter, referred to as 'identification device') may be implemented in a type of smart card. Hence, the identification device can be coupled to the mobile terminal 100 via a port.

Also, the interface unit 170 may serve as a path for power to be supplied from an external cradle to the mobile terminal 100 when the mobile terminal 100 is connected to the external cradle or as a path for transferring various command signals inputted from the cradle by a user to the mobile terminal 100. Such various command signals or power inputted from the cradle may operate as signals for recognizing that the mobile terminal 100 has accurately been mounted to the cradle.

The controller 180 typically controls the overall operations of the mobile terminal 100. For example, the controller 180 performs the control and processing associated with telephony calls, data communications, video calls, and the like. The controller 180 may include a multimedia module 181 which provides multimedia playback. The multimedia module 181 may be configured as part of the controller 180 or as a separate component.

The controller 180 can perform a pattern recognition processing so as to recognize writing or drawing input on the touch screen as text or image.

The power supply unit 190 serves to supply power to each component by receiving external power or internal power under control of the controller 180.

Various embodiments described herein may be implemented in a computer-readable medium using, for example, software, hardware, or some combination thereof.

For a hardware implementation, the embodiments described herein may be implemented within one or more of Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, micro-controllers, micro processors, other electronic units designed to perform the functions described herein, or a selective combination thereof. In some cases, such embodiments are implemented by the controller 180.

For software implementation, the embodiments such as procedures and functions may be implemented together with separate software modules each of which performs at least one of functions and operations. The software codes can be implemented with a software application written in any suitable programming language. Also, the software codes may be stored in the memory 160 and executed by the controller 180.

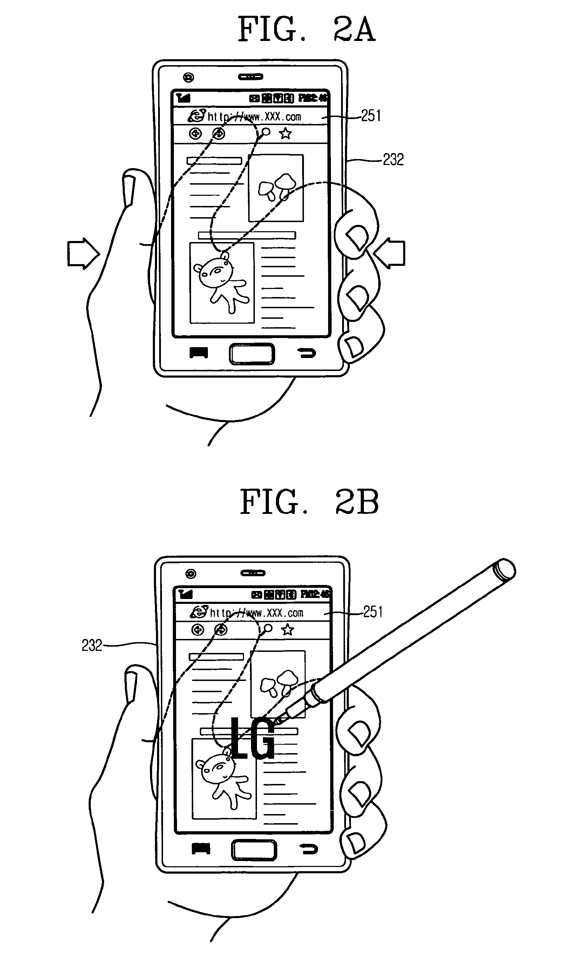

FIGS. 2A and 2B are conceptual views showing the operation of the mobile terminal according to the present invention.

Referring to FIG. 2A, the mobile terminal includes a display unit 251 disposed on one surface of the terminal body, e.g., the front surface (or front side) of the terminal body. The display unit 251 may be provided with a touch sensor configured to sense a touch input. Visual information may be output to the display unit 251 in the form of images, texts, icons, etc. As shown, a web page including such visual information may be output.

As shown, the side surface (or lateral side) of the terminal body is configured so as to be squeezed by a user. As an example, a squeeze sensing unit 232 is disposed on the side surface of the terminal body.

Referring to FIG. 2B, once a user presses the squeeze sensing unit 232 in a web page mode (i.e., applies a squeeze pressure to the terminal body), the current mode of the web page output to the display unit 251 is converted into a writing mode (execution of a quick memo application). In this case, the display unit 251 is in a writable state where writing can be performed through a touch input in a writing mode. More specifically, a screen shot may be performed with respect to the web page output to the display unit 251, and the user may input memos on the web page.

A control command for converting the current mode into a writing mode may be executed by an additional hot key. However, in the present invention, an additional hot key is not provided, but the squeeze sensing unit 232 serves as a hot key. In conclusion, the mobile terminal is configured to receive not only a touch input, but also a squeeze input. In some cases, the two inputs may interwork with each other.

Hereinafter, a hardware configuration of the mobile terminal which performs operations shown in FIGS. 2A and 2B will be explained in more detail.

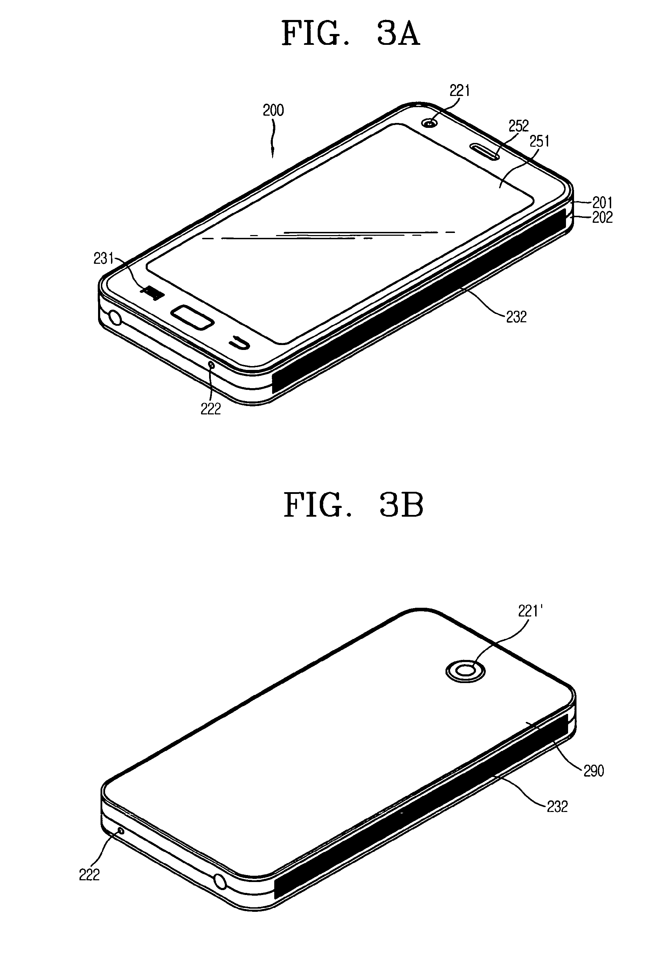

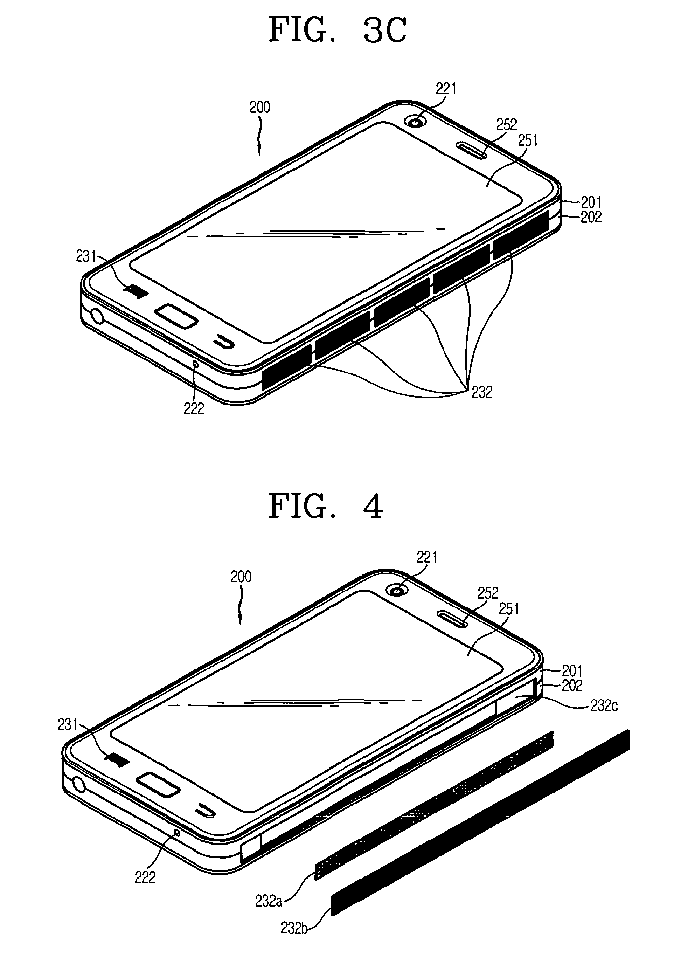

FIG. 3A is a front perspective view of a mobile terminal according to an embodiment of the present invention, FIG. 3B is a rear perspective view of the mobile terminal of FIG. 3A, and FIG. 3C is a perspective view showing a modification example of the mobile terminal of FIG. 3A.

The mobile terminal 200 according to the present disclosure is a bar type mobile terminal. However, the present disclosure is not limited to this, but may be applied to a slide type in which two or more bodies are coupled to each other so as to perform a relative motion, a folder type, or a swing type, a swivel type and the like.

A case (casing, housing, cover, etc.) forming the appearance of a terminal body may include a front case 201 and a rear case 202. A space formed by the front case 201 and the rear case 202 may accommodate various components therein. At least one intermediate case may further be disposed between the front case 201 and the rear case 202.

Such cases may be formed by injection-molded synthetic resin, or may be formed using a metallic material such as stainless steel (STS) or titanium (Ti).

At the front case 201, may be disposed a display unit 251, an audio output unit 252, a camera module 221, etc. An interface unit (not shown, refer to 170 of FIG. 1), etc. may be disposed on the side surfaces of the front case 201 and the rear case 202.

The display unit 251 occupies most parts of a main surface of the front case 201. The display unit is disposed on the front surface of the mobile terminal, and is configured to display visual information. The audio output unit 252 and the camera 221 are arranged at a region close to one end of the display unit 251. A front user input unit 231 and a microphone 222 are arranged at a region close to another end of the display unit 251.

The front user input unit 231, an example of the user input unit 130 (refer to FIG. 1) may include a plurality of manipulation units. The manipulation units may be referred to as manipulating portions, and may include any type of ones that can be manipulated in a user's tactile manner. In this embodiment, the front user input unit 231 is implemented as a touch key. The display unit 251 may form a touch screen together with a touch sensor. In this case, the touch screen may be a user input unit. Under such configuration, the front surface of the mobile terminal is implemented as a form factor where no push key is disposed below the touch screen. However, the present invention is not limited to this. That is, the front user input unit 231 may be implemented only as a push key. Alternatively, the front surface of the mobile terminal may not be provided with a front user input unit.

Referring to FIG. 3B, a camera module 221' may be additionally provided on the rear case 202. The camera module 221' faces a direction which is opposite to a direction faced by the camera module 221 (refer to FIG. 3A), and may have different pixels from those of the camera module 221.

For example, the camera module 221 may operate with relatively lower pixels (lower resolution). Thus, the camera module 221 may be useful when a user can capture his face and send it to another party during a video call or the like. On the other hand, the camera module 221' may operate with a relatively higher pixels (higher resolution) such that it can be useful for a user to obtain higher quality pictures for later use. The camera modules 221 and 221' may be installed at the terminal body so as to rotate or pop-up.

A flash and a mirror (not shown) may be additionally disposed close to the camera module 221'. The flash operates in conjunction with the camera module 221' when taking a picture using the camera module 221'. The mirror can cooperate with the camera module 221' to allow a user to photograph himself in a self-portrait mode.

An audio output unit may be additionally arranged on a rear surface (or rear side) of the terminal body. The audio output unit disposed on the rear surface of the terminal body may implement a stereo function, together with the audio output unit 252 (refer to FIG. 3A) disposed on the front surface of the terminal body. And, the audio output unit disposed on the rear surface of the terminal body may be configured to operate as a speakerphone during a call.

A power supply unit 290 for supplying power to the mobile terminal 200 is mounted to the terminal body. The power supply unit 290 may be mounted in the terminal body, or may be detachably mounted to the terminal body.

Referring to FIGS. 3A and 3B back, the squeeze sensing unit 232 is disposed on the side surface of the terminal body, and is configured to sense a pressure applied thereto with a size more than a preset value.

More specifically, the squeeze sensing unit 232 may be positioned on one side surface of the front case 201 and the rear case 202. Alternatively, the squeeze sensing unit 232 may be positioned on another side surface of the front case 201 and the rear case 202. Alternatively, the squeeze sensing units 232 may be positioned on two side surfaces of the front case 201 and the rear case 202, so as to face each other. However, the present invention is not limited to this. That is, the squeeze sensing unit 232 may be positioned on one side surface, or four side surfaces of the mobile terminal.

Referring to FIG. 3C, the squeeze sensing unit 232 may be provided in plurality, and the plurality of squeeze sensing units 232 may be spaced from each other on one side surface of the terminal body. In a case where a pressure is applied to the squeeze sensing unit 232 by a user's left hand or right hand, the controller 180 (refer to FIG. 1) may sense an applied pressure according to the position of each finger.

As aforementioned, the squeeze sensing unit 232 of the present invention implements a new type of manipulation unit. Hereinafter, the configuration of the squeeze sensing unit 232 will be explained in more detail. FIG. 4 is a partial exploded view of the mobile terminal of FIG. 3A.

As shown in FIG. 4, the squeeze sensing unit 232 includes a squeeze sensor 232a and an elastic member 232b.

The squeeze sensor 232a may be disposed on the side surface of the terminal body, and may be provided in one or more in number. More specifically, the squeeze sensor 232a may sense a squeeze state (a user's squeeze operation) generated when the user's fingers apply a pressure more than a preset value thereto. A mounting groove 232c configured to mount the squeeze sensor 232a is formed on the side surface of the terminal body.

The state of the mobile terminal may be categorized into a grip state and a squeeze state according to the size of a pressure applied to the squeeze sensing unit 232. For instance, when a pressure less than a preset value is applied to the squeeze sensor 232, the mobile terminal is in a grip state. On the other hand, when a pressure more than a preset value is applied to the squeeze sensor 232, the mobile terminal is in a squeeze state. The controller 180 (refer to FIG. 1) may perform a control operation corresponding to an input applied to the squeeze sensing unit 232 in a squeeze state.

The elastic member 232b is formed to cover the squeeze sensor 232a on the side surface of the terminal body, and is elastically transformed by a pressure applied to the side surface. For instance, the elastic member 232b may be a rubber pad formed in a long length along the side surface.

The squeeze sensing unit 232 may include a feedback module (not shown) configured to output a feedback in an audible or tactile manner, upon sensing of a pressure by the squeeze sensor. For instance, if the mobile terminal is in a squeeze state, the feedback module may output a particular sound, or may apply a pressure to the rubber pad in an opposite direction to the squeeze direction, or may provide vibrations to the mobile terminal, etc.

The squeeze sensing unit 232 may be configured to convert a pressure applied to a prescribed part to an electric input signal. Further, the squeeze sensing unit 232 may sense a pressure size, a pressure frequency (the number of times that a pressure is applied), a time duration for which a pressure is applied, a pressure position, and a pressure area. Here, the display unit 251 may display an indicator indicating at least one of a pressure size, a pressure frequency (the number of times that a pressure is applied), a time duration for which a pressure is applied, a pressure position, and a pressure area.

The controller 180 (refer to FIG. 1) may determine whether the terminal body is held in a user's left or right hand, based on a point to which a pressure has been applied. If the user's left hand applies a squeeze pressure to the squeeze sensing unit, the pressure applied from only four fingers is sensed. In this case, the squeeze sensing unit 232 may be provided only on the right side surface of the mobile terminal.

The squeeze sensing unit 232 performs not only the operations shown in FIGS. 2A and 2B, but also a new type of user interface related to a writing mode.

For instance, the controller 180 may recognize a type of the squeeze operation by using the squeeze sensing unit 232, and may generate different control commands related to a writing mode based on the recognized type. Hereinafter, will be explained new user interfaces according to a squeeze operation related to a writing mode.

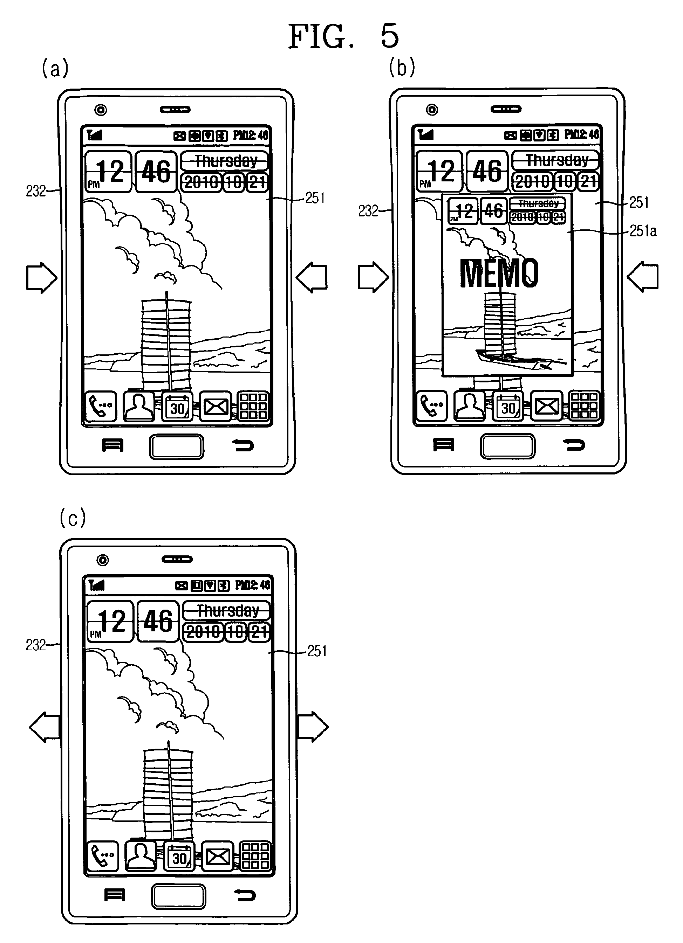

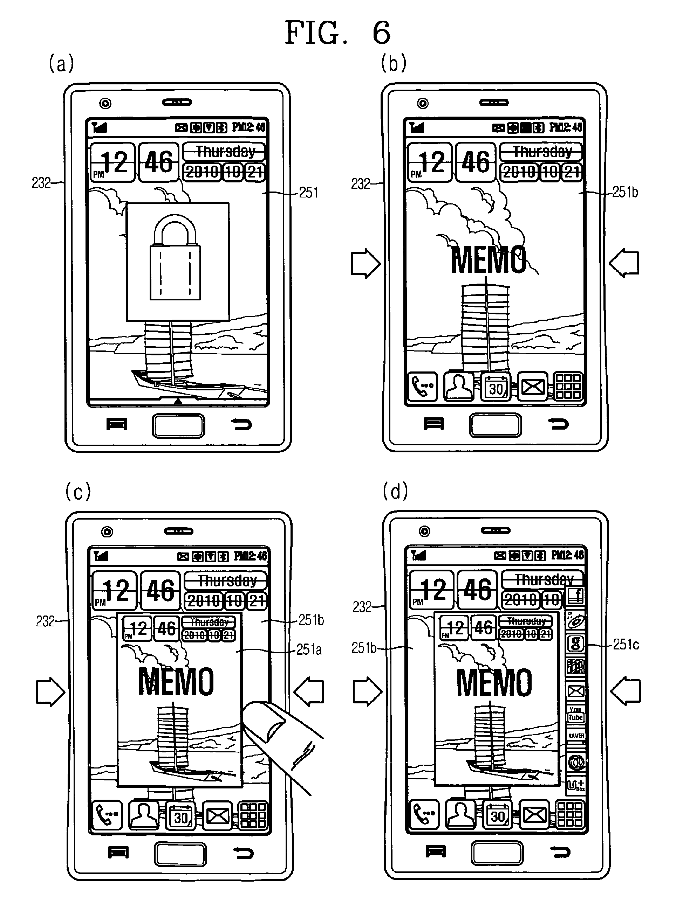

FIGS. 5 to 14 are conceptual views showing user interfaces implemented by the present invention, and FIGS. 5 and 6 are views showing user interfaces related to execution of a writing mode.

Referring to FIG. 5 (a), if a pressure which satisfies a preset condition is applied to the squeeze sensing unit 232, the current state of the display unit 251 is convert into a state where writing can be performed through a touch input. That is, as a memo window 251a having a new layer (e.g., screen shot) pops-up by a squeeze operation, the current state of the display unit 251 is convert into a writable state (execution of a quick memo). In other words, the controller 180 (refer to FIG. 1) converts the current mode of the display unit 251 into a writing mode, upon recognition of a squeeze operation in a mode different from the writing mode.

As an example, executing a quick memo by a squeeze operation can be performed in a state where a home screen page has been output to the display unit 251.

The home screen page may be referred to as an 'idle screen', and may be output onto the display unit 251 when the mobile terminal is in an idle state. More specifically, icons, widgets, etc. indicating applications installed at the mobile terminal may be displayed on the home screen page. Also, the home screen page may be formed in plurality according to a user's selection or the number of applications installed at the mobile terminal.

In a state where the home screen page has been output as shown in FIG. 5 (a), if a pressure is simultaneously applied to the squeeze sensing units disposed on two side surfaces of the mobile terminal, for prescribed seconds (e.g., 3 seconds), a memo window 251a having a new layer pops-up as shown in FIG. 5 (b). Then, the current mode of the display unit 251 is converted into a writing mode. On the memo window 251a having a new layer, a memo is input through writing. In this case, a toast message indicating a writing mode may be output before the memo window 251a pops-up.

However, the present invention is not limited to this. That is, in a case where a pressure is simultaneously applied to the squeeze sensing units disposed on two side surfaces of the mobile terminal, for prescribed seconds (e.g., 3 seconds), the current screen of FIG. 5 (a) may be converted into a state where a writing input can be performed. This may be applied to all embodiments to be later explained.

Referring to FIG. 5 (c), if a pressure applied to the squeeze sensing unit in a writing mode is released, the current screen returns to the initial state (a state where the home screen page has been output), and the memo window may be stored in the memory of the mobile terminal, etc. The writing mode is maintained while a pressure is applied to the squeeze sensing unit 232. However, the writing mode is converted into other mode when the pressure applied to the squeeze sensing unit 232 is released. However, the present invention is not limited to this. For instance, the current screen may return to the initial state as a pressure is applied to the squeeze sensing unit 232 once more.

Pop-up of the memo window by a squeeze operation may be executed in all types of operation modes, which will be explained with reference to FIG. 6. FIG. 6 is a view showing user interfaces for executing a quick memo in a locking mode.

FIG. 6 (a) indicates a locking mode where a touch input onto at least part of the display unit 251 is limited. For instance, the locking mode may be a state where only a touch input related to a locked state releasing operation can be performed.

As shown in FIG. 6 (b), if a pressure which satisfies a preset condition is applied to the squeeze sensing unit 232, the locking mode is converted into a writing mode. In this case, a basic screen of the writing mode may be output while the writing mode is being executed. The basic screen may not be a screen shot, but may be a memo window having a pre-stored background. Alternatively, the basic screen may be a screen for outputting a pre-stored memo window 251b having a pre-stored memo written thereon. Such writing mode may be implemented by input of another hot key of the mobile terminal, rather than the squeeze sensing unit.

If a pressure is simultaneously applied to the squeeze sensing units 232 disposed on two side surfaces of the mobile terminal for prescribed seconds (e.g., 3 seconds) in the state of FIG. 6 (b), a memo window 251a having a new layer pops-up as shown in FIG. 6 (c). The popped-up memo window 251a may be a new layer that the pre-stored memo window 251b has popped-up to be in a writable state, through a touch input. Hereinafter, a state where the memo window 251a has popped-up is referred to as an 'input mode'. That is, the input mode indicates a state where a window on which writing can be substantially performed has popped-up, even while a quick memo application is being executed.

In this case, if the pressure applied to the squeeze sensing unit is released, the current screen returns to the state of FIG. 6 (b) (a state where the basic screen of the writing mode has been output). And, the memo window of a new layer may be stored in the memory of the mobile terminal, etc.

Referring to FIG. 6 (d), a list window 251c having a list of objects to be transmitted or stored among contents written on the memo window, may be output to the display unit in a state where the memo window has popped-up. For instance, if a user touches an icon outside the memo window 251 a, not the memo window 251a where a writing input can be performed, the list window 251c may be output.

The list window may be a menu for transferring the memo window to a desired folder and application in a drag & drop manner. For instance, if a user touches the memo window and then drags and drops the memo window to an icon of a desired application, the current screen is converted into a screen of the corresponding application. As another example, in case of dragging and dropping the memo window to a folder, the writing mode may be ended while a toast message pops-up, the toast message indicating that the memo window has been stored in the folder.

As still another example, the controller 180 is configured to recognize a type of a squeeze operation by using the squeeze sensing unit, and to generate different control commands related to the writing mode based on the recognized type. For instance, the size of characters written in the writing mode (input mode) may be enlarged or contracted according to a type of a squeeze operation.

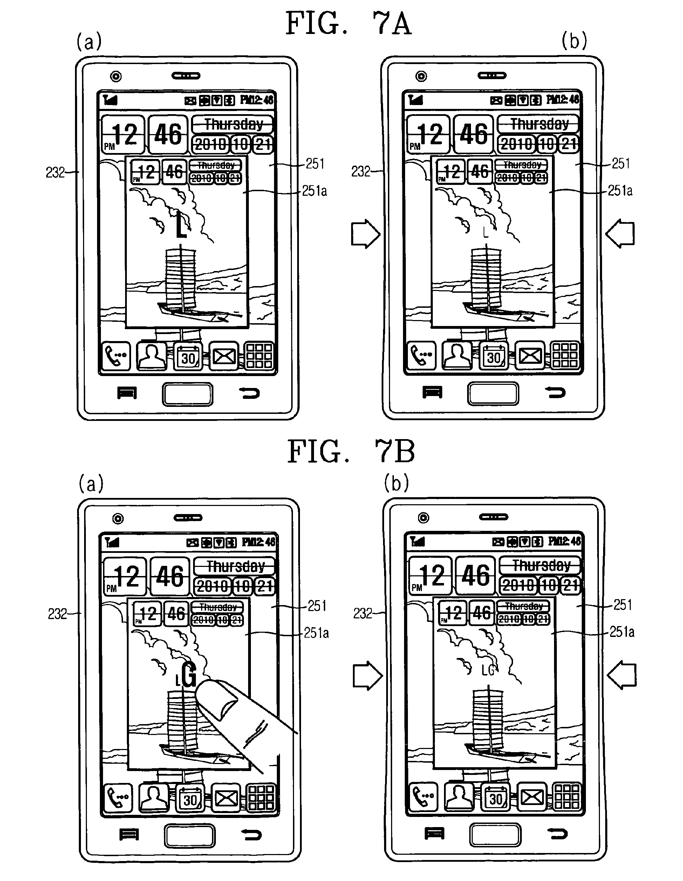

FIGS. 7A and 7B are views showing user interfaces related to execution of a contraction function by other squeeze operation in a writing mode.

As shown in FIG. 7A, in case of an input mode where a screen layer of a quick memo application (memo window) has popped-up in a writing mode, the size of characters written on the memo window may be contracted. If the size of characters input in a quick memo mode cannot be controlled, there is a difficulty in inputting a large amount of memos. Especially, in a case where a pen is not provided, the amount of characters which can be substantially input is very limited. To solve such problems, in this embodiment, all characters input to the memo window can be gradually contracted, if a pressure is simultaneously applied to the squeeze sensing units disposed on two side surfaces of the mobile terminal for prescribed seconds (e.g., 3 seconds) in a state where the memo window has popped-up. Such squeeze input for contracting characters may be referred to as 'squeeze in'.

If the memo window has popped-up as a first pressure is applied to the squeeze sensing units disposed on two side surfaces of the mobile terminal, characters may be contracted (execution of a contraction mode) as a second pressure greater than the first pressure is applied. When the mobile terminal 200 enters a contraction mode, contraction may be executed while a toast message indicating 'contraction mode' is output, and then the current state may be converted into a writable state. Here, a contraction proportion may be preset, and may be increased according to a time duration of the second pressure.

The processes of FIG. 7A may be repeatedly performed, so that characters can be input in large letters, but can be stored in small letters. For instance, "L" is input in a large letter, and then is contracted by a squeeze in operation of a high intensity. Next, the intensity of the squeeze in operation is reduced so that the memo window can be in a writable state. Then, "G" is input in a large letter, and then is contracted by a squeeze in operation. As a result, "LG" is stored in the form of small letters.

Referring to FIG. 7B, characters to be contracted may be selected by a user. For instance, one of a plurality of characters input onto the memo window may be selected by a user's touch. If "G" included in "LG" is too large, a user may select the "G" in a touch manner. Then, if a pressure is simultaneously applied to the squeeze sensing units disposed on two side surfaces of the mobile terminal for prescribed seconds, only the selected character may be contracted. In this case, if the pressure applied to the squeeze sensing unit is lowered, contraction is stopped. Then, a toast message indicating "writing mode" may be output, and the current mode may be converted into an input mode. The contraction mode may be ended as the pressure applied to the squeeze sensing unit is released. Further, an enlargement mode and an edition mode to be later explained may be ended as the pressure applied to the squeeze sensing unit is released.

Under the above configurations, may be implemented a user's feeling like he or she physically reduces the size of a character (squeezes) by applying a pressure to the character. That is, implemented is a user interface (UI) where the size of an object seems to be actually reduced when a pressure is applied to the object. In this case, the degree of size contraction may be controlled according to the size of an applied pressure.

Like the contraction function, an enlargement function may be performed by a squeeze operation.

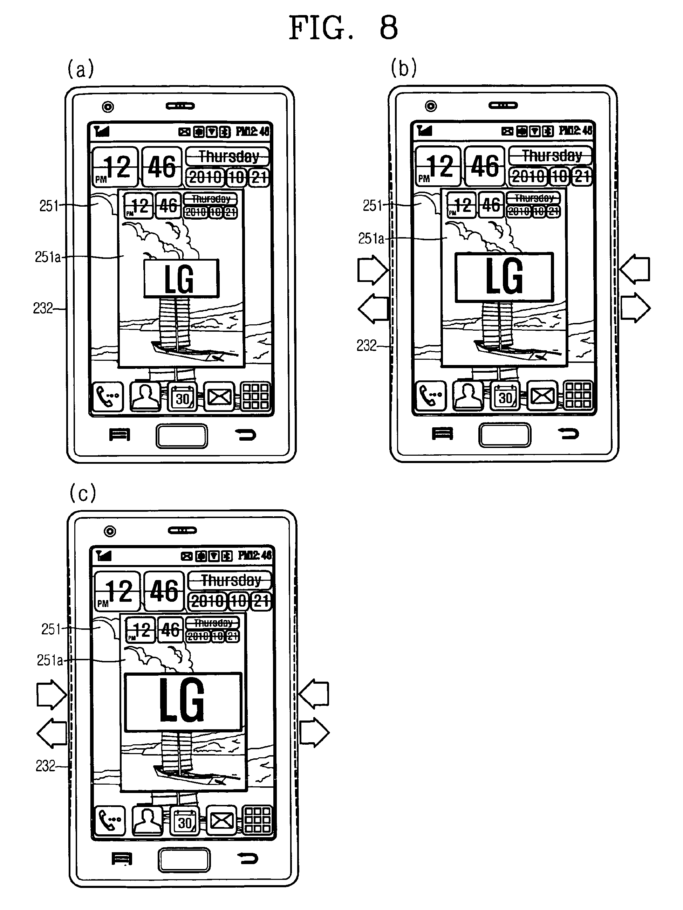

FIG. 8 shows a user interface related to execution of an enlargement function by another squeeze operation in a writing mode.

If a squeeze operation in an input mode corresponds to pumping for pressing two side surfaces of the terminal body and releasing the pressed state in a repeated manner, characters may be enlarged or contracted by a single pumping. Here, the pumping indicates an operation to press the mobile terminal and then release the pressed state in a repeated manner by using a user's hand. More specifically, the pumping indicates an operation to hold the mobile terminal and then release an applied pressure by widening a user's hand, unlike in the aforementioned embodiment.

In an enlargement mode, implemented is a user interface for increasing the size of an object like pumping air into a ball. Such squeeze input for enlarging characters may be referred to as a squeeze out operation.

For instance, in a case where characters have been input to the memo window as shown in FIG. 8 (a), if a user pumps the squeeze sensing units disposed on two side surfaces of the mobile terminal as shown in FIGS. 8 (b) and (c), the characters are enlarged by a single pumping. The characters may be enlarged in a constant proportion by a single pumping, and the enlargement proportion may be set by a user.

An enlargement function by squeeze out may be performed only in an input mode. For instance, if a user has contracted characters in an input mode in a proportion greater than a desired value, the characters may be enlarged to a desired size by the pumping.

In the aforementioned contraction mode, the size of characters may be gradually decreased as a user repeatedly applies a pressure and releases the applied pressure. In this case, contraction and enlargement may be differentiated from each other according to a period, or a time interval between a releasing operation and a pressing operation performed after the releasing operation. For instance, if a pressure has a larger size and a shorter period than that applied during a squeeze in operation, or if a time interval between a releasing operation and a pressing operation is shorter than that during a squeeze in operation, the size of all input characters may be gradually contracted (vice versa).

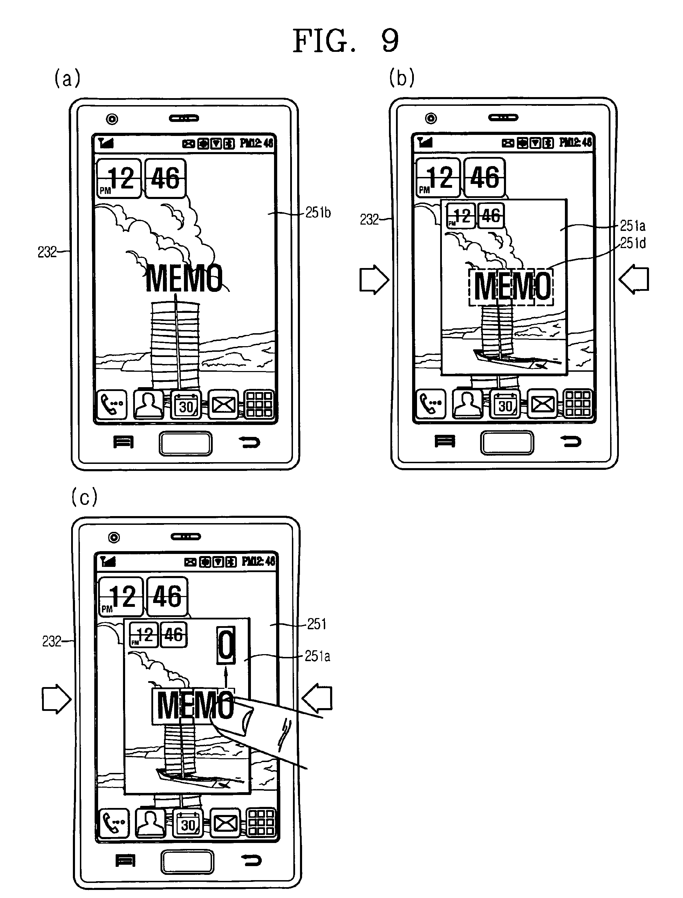

So far, explained was a contraction or enlargement function by a squeeze operation. As another example, said different control commands may be set according to a time duration of a squeeze operation or a size of an applied pressure in a writing mode. That is, the writing mode may be converted into one of an enlargement mode, a contraction mode and an edition mode, according to a time duration of a squeeze operation or a size of an applied pressure. FIG. 9 shows a case where the memo window of FIG. 5 has popped-up, or a case where an edition mode is executed by a pressure having a different size and a different time duration from that applied in the contraction mode of FIG. 7.

Referring to FIG. 9, if a pressure is simultaneously applied to the squeeze sensing units disposed on two side surfaces of the mobile terminal for prescribed seconds (e.g., 3 seconds) in a writing mode, the writing mode may be converted into an edition mode. In this case, the pressure may be higher or may be performed for a longer time, than that applied when converting the current mode into an input mode, or when contracting the size of characters.

Referring to FIG. 9 (a), a basic screen of a writing mode may be output to the display unit while the writing mode is being performed (while an application of a quick memo is being executed). The basic screen may be a screen for outputting the pre-stored memo window 251 b. If there is a squeeze operation for converting the current mode into an edition mode in the state of FIG. 9 (a), a toast message indicating an "edition mode" is output to the display unit as shown in FIG. 9 (b). Then, input characters are highlighted per entity. As an example of such highlighting, regions selected per entity may be defined by boundary lines 251d.

An input mode may be converted into an edition mode by a squeeze operation for converting the current mode into an edition mode. An input character is set as a single entity, based on a time point when a pen contacting a screen for input is separated from the screen.

Referring to FIG. 9 (c), the edition mode is set so that input characters can be individually moved by a touch input. More specifically, a user may align each character (each entity) set to be moveable, on a desired position. For instance, a boundary line which defines a region and a character within the region may be together moved by a drag input. Once the mobile terminal enters an edition mode, the edition mode may be maintained even under the same pressure as that in an input mode. In a case where an input mode has been converted into an edition mode, the edition mode is re-converted into the input mode when an applied pressure is completely released. On the other hand, if a released state is maintained for a prescribed time, the memo window 251b is downward moved to cause a basic screen of the writing mode to be displayed.

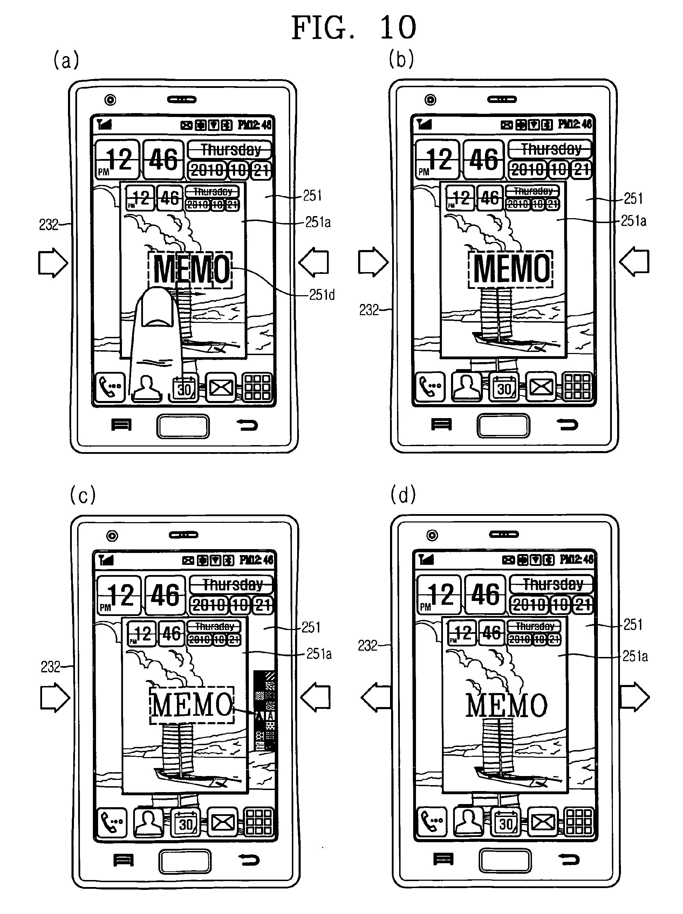

In the edition mode, edition may be performed by a touch input or a squeeze input, which is shown in FIGS. 10 to 13.

Referring to FIG. 10, the edition mode is configured so that characters can be grouped or a prescribed region can be set by a drag input.

As an example, in a case where each entity is displayed with each boundary line in an edition mode as shown in FIG. 10 (a), if the boundary line is dragged so that the plurality of entities can be included in a region as shown in FIG. 10 (b), the plurality of entities are grouped within the region.

As another example, if a user defines a prescribed region by a drag input, a boundary line is generated along the drag line, and characters within the prescribed region may be grouped.

Referring to FIG. 10 (c), if a region outside a layer is selected by a touch input after the entities have been grouped in an edition mode, displayed is a menu window having listed edition menus including color change, deletion, input style, etc. For instance, if a user touches a character font icon and then drags/drops the character font icon to a group of desired characters, the characters within the group have a font change. Also, as shown in FIG. 10 (c), if a user touches a group of desired characters and then drags/drops the group to a character font icon, the characters within the group have a font change. In this case, the position of the characters does not change. The color of the characters may change in the same manner. As another example, if a user touches a group of desired characters and then drags/drops the group to a deletion icon, the characters within the group may be deleted.

Referring to FIG. 10 (d), if the pressure applied to the squeeze sensor is released, the current mode may be converted into an input mode.

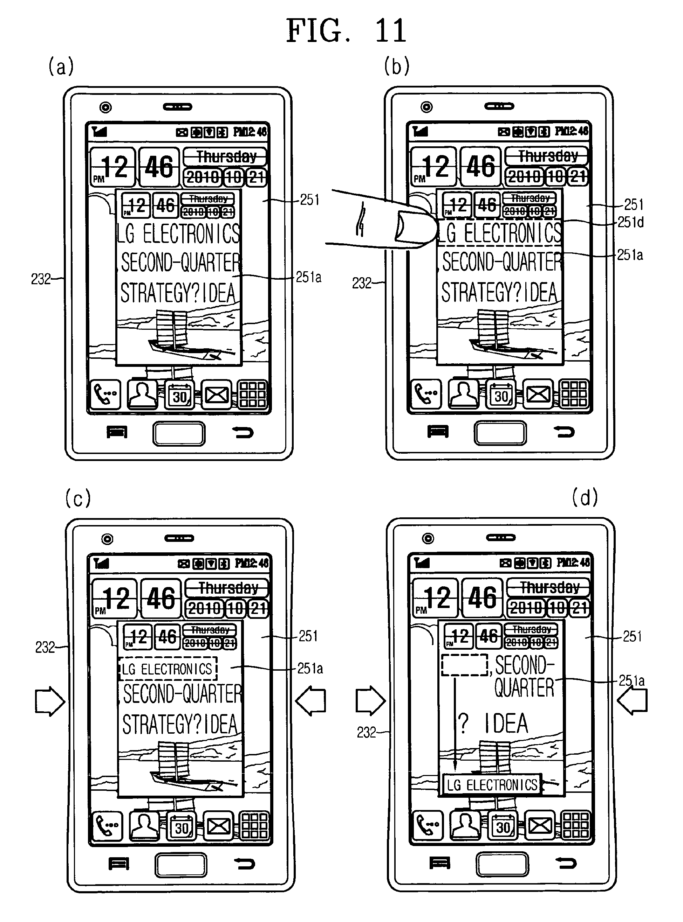

Referring to FIG. 11, grouped characters or characters within a prescribed region may have a size change by a squeeze operation in an edition mode (or may have a font change, etc.).

For instance, in an edition mode of FIG. 11 (a), if a region to be contracted is dragged to be grouped in the form of a circle or a quadrangle (refer to FIG. 11 (b)), characters within the region are grouped as a unit. As a result, a boundary line 251d which defines the region may be output. Then, if a pressure is continuously applied to the squeeze sensing unit for more than prescribed seconds as shown in FIG. 11 (c), the size of the characters within the boundary line is contracted. In this case, the size of the region defined by the boundary line may be also contracted to correspondence to the size of the characters.

However, the present invention is not limited to this. More specifically, in a case where a sentence has been input to the display unit, the entire size of the sentence may be contracted by a squeeze operation.

Referring to FIG. 11 (d), the contracted characters may be moved by a user's drag. Then, if the pressure applied to the squeeze sensing unit is released, the current mode may be converted into an input mode (other function mode included in an edition mode). If other characters are to be contracted, the user has only to drag a corresponding region for grouping and then perform a squeeze operation.

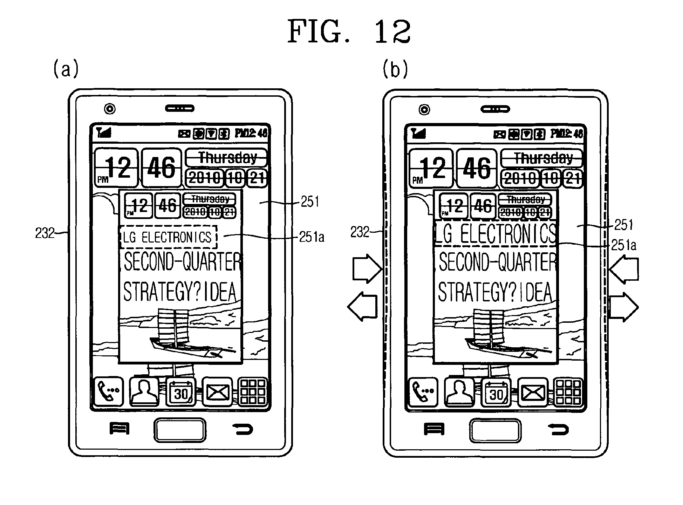

FIG. 12 shows a case where the size of characters is enlarged in an edition mode. If a region to be enlarged is dragged in an edition mode of FIG. 12 (a) in the form of a circle or a quadrangle, characters within the region are grouped as a unit. Referring to FIG. 12 (b), the size of characters is gradually enlarged whenever a single pumping is applied to the squeeze sensing unit 232. Like in the aforementioned contraction method, if a user drags a boundary line to a desired position, corresponding characters may be moved. If the pressure applied to the squeeze sensing unit is released, the current mode returns to the initial mode.

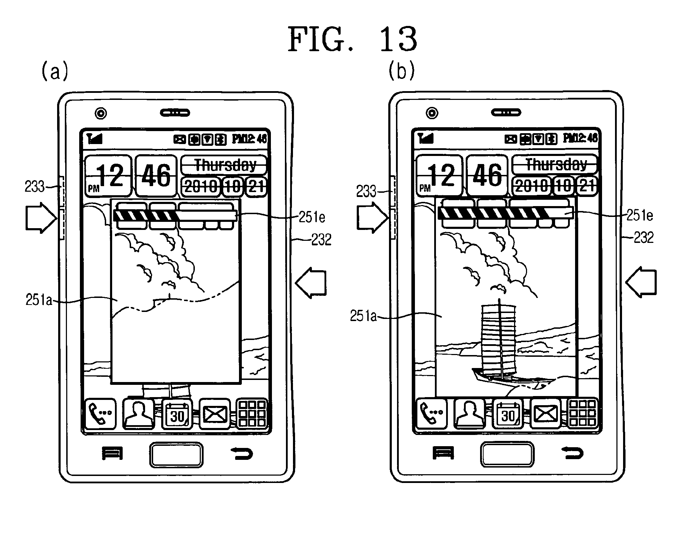

FIG. 13 is a conceptual view showing another embodiment of the present invention.

Referring to FIG. 13, the squeeze sensing unit may sense a squeeze operation by being combined with other input keys. For instance, in a case where the squeeze sensing unit is disposed only on one side surface of the terminal body, if the squeeze sensing unit is pressed together with one of volume keys 233 disposed on another side surface, the squeeze sensing unit recognizes its pressed state as a squeeze operation.

In this case, information on a time duration of the squeeze operation may be output to the display unit. The controller may generate a control command based on a time duration of a pressure applied to the squeeze sensing unit, and information 251e variable according to the time duration may be output to the display unit. For instance, if the squeeze sensing unit is pressed, contents on the memo window 251a may be gradually shown according to a time duration, while an icon indicating a progress state of the time duration is output.

In this embodiment, the size of characters may be enlarged if a volume-up key of the volume keys 233 is pushed, whereas the size of characters may be contracted if a volume-down key of the volume keys 233 is pushed. In this case, the mobile terminal may enter a writing mode when the squeeze sensing units disposed at two sides of the mobile terminal are pressed, and when a single volume key and a single squeeze sensing unit are pressed. The mobile terminal may also enter a writing mode when a single volume key and other key (e.g., power-on or power-off key) are simultaneously pressed, or when the volume-up key and the volume-down key are simultaneously pressed.

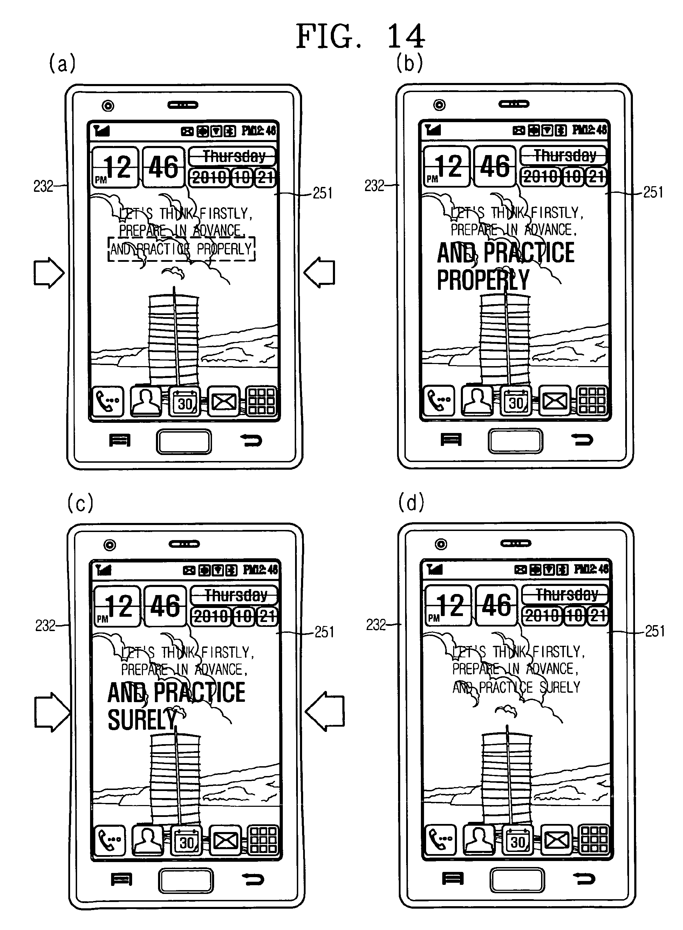

FIG. 14 is a conceptual view showing still another embodiment of the present invention.

Referring to FIG. 14, the size of characters contracted by a squeeze input may be enlarged to be corrected by other squeeze input. If the characters are to be corrected on the middle part of a sentence, not on the end part, a desired part is selected to be enlarged. In this case, the sentence may be rearranged.

For instance, if part of a sentence, "and practice properly" is selected from contracted characters shown in FIG. 14 (a), the part is enlarged by a squeeze out operation as shown in FIG. 14 (b). In this case, the characters, "practice" and "properly" may be output on different lines. The enlarged characters may be corrected into other characters shown in FIG. 14 (c), i.e., "practice surely". In this case, if a user inputs new characters, the already-output characters may be deleted. Then, said other characters are contracted into the same size as the rest characters by a squeeze in operation. The squeeze in operation may be performed with a pressure higher than that applied during the squeeze out operation, and the corrected phrase "practice surely" may be output to the initial line.

The present invention has the following advantages.

Firstly, as a user's squeeze operation is sensed by the squeeze sensor, various inputs can be implemented in the mobile terminal. This can allow implementation of a new type of user interface related to a writing mode.

Secondly, as an input applied to the squeeze sensor is differentiated from an input applied to the touch sensor, errors occurring when a user's input is executed can be reduced. This can enhance a user's convenience.

The foregoing embodiments and advantages are merely exemplary and are not to be considered as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be considered broadly within its scope as defined in the appended claims, and therefore all changes and modifications that fall within the metes and bounds of the claims, or equivalents of such metes and bounds are therefore intended to be embraced by the appended claims.

## Claims

1. A mobile terminal, comprising:
a terminal body having a front side, a rear side, and lateral sides that connect the front side and the rear side;
a display (151, 251) disposed at the front side and configured to receive and display information;
a sensing unit (232) mounted to at least one of the lateral sides and configured to sense a pressure applied to the at least one of the lateral sides in response to an input that generates the pressure; and
a controller configured to:
recognize a specific one of a plurality of operations related to a writing mode based on the sensed pressure; and
perform the recognized specific one of the plurality of operations.

2. The mobile terminal of claim 1, wherein:
the input is received in a non-writing mode; and
the controller is further configured to enter the writing mode in response to the input.

3. The mobile terminal of claim 1 or 2, wherein the controller is further configured to:
control the display to display a memo window in the writing mode; and
receive a first touch input via the memo window for writing in the writing mode.

4. The mobile terminal of claim 3, wherein the controller is further configured to:
control the display to display a plurality of objects;
process a selection of one of the plurality of objects; and
store contents written on the memo window in association with the selected one of the plurality of objects.

5. The mobile terminal of any one of claims 2 to 4, wherein:
the sensing unit (232) is further configured to sense the pressure when a level of the pressure is determined to be equal to or greater than a threshold level; and
the controller is further configured to:
maintain the writing mode as long as the input is continuously maintained and the level of the pressure is continuously maintained to be equal to or greater than the threshold level; and
enter the non-writing mode when the input is released or when the level of the pressure is determined to be less than the threshold level.

6. The mobile terminal of any one of claims 1 to 5, wherein:
the input is received in the writing mode;
the controller is further configured to receive a first touch input via the display comprising a touch screen in the writing mode; and
the recognized specific one of the plurality of operations comprises adjusting a size of written characters displayed in response to the first touch input.

7. The mobile terminal of claim 6, wherein:
the sensing unit (232) is mounted to two lateral sides that are touched by a user's hand when holding the mobile terminal such that the input is received via both of the two lateral sides;
the input comprises applying the pressure to the two lateral sides and releasing the pressure from the two lateral sides such that the pressing and releasing causes resizing of the displayed characters by a preset ratio; and
the displayed written characters are resized according to a number of inputs such that the displayed written characters are resized incrementally with each input received.

8. The mobile terminal of any one of claims 1 to 7, wherein the controller is further configured to recognize the specific one of the plurality of operations based on a duration of the pressure or a strength level of the pressure sensed by the sensing unit in the writing mode.

9. The mobile terminal of any one of claims 1 to 8, wherein the plurality of operations comprise at least a resizing mode or an editing mode with respect to characters displayed in the writing mode.

10. The mobile terminal of claim 9, wherein the controller is further configured to group all of the characters or a portion of the characters or select a portion of the characters in response to a drag input received in the editing mode.

11. The mobile terminal of claim 10, wherein the grouped or selected characters are resized in response to the input received in the resizing mode or the editing mode.

12. The mobile terminal of claim 9, wherein the controller is further configured to end the resizing mode or the editing mode when the input is released or a level of the pressure sensed by the sensing unit is determined to be less than a threshold level.

13. The mobile terminal of claim 9, wherein the controller is further configured to move a specific character among the displayed characters individually in response to a second touch input received in the editing mode such that the specific character is moved to a different position on the display.

14. The mobile terminal of claim 1, wherein the controller is further configured to:
enter the writing mode in response to the input;
receive a first touch input via the display comprising a touch screen in the writing mode; and
control the display to display a memo window on which the first touch input is received when the sensed pressure satisfies a preset condition.

15. The mobile terminal of any one of claims 1 to 14, wherein the sensing unit (232) comprises:
at least one sensor (232a) disposed at the at least one of the lateral sides and configured to sense the pressure; and
a feedback module configured to output feedback information in at least an audible manner or a tactile manner when the pressure is sensed by the at least one sensor.
